(19) Europäisches Patentamt
European Patent Office
Office européen des brevets

(11) EP 1 640 908 A1

(12) **EUROPEAN PATENT APPLICATION**
published in accordance with Art. 158(3) EPC

(43) Date of publication:
29.03.2006 Bulletin 2006/13

(51) Int Cl.:
*G06T 3/00* (1995.01)    *H04N 5/225* (1985.01)
*H04N 5/265* (1985.01)    *G02B 21/36* (1968.09)

(21) Application number: 04731757.3

(22) Date of filing: 07.05.2004

(86) International application number:
**PCT/JP2004/006505**

(87) International publication number:
**WO 2004/102478 (25.11.2004 Gazette 2004/48)**

(84) Designated Contracting States:
**DE GB**

(30) Priority: **13.05.2003 JP 2003134732**

(71) Applicant: **Olympus Corporation**
**Tokyo 151-0072 (JP)**

(72) Inventor: **IOKA, Ken**
**Tokyo (JP)**

(74) Representative: **von Hellfeld, Axel**
**Wuesthoff & Wuesthoff**
**Patent- und Rechtsanwälte**
**Schweigerstrasse 2**
**81541 München (DE)**

(54) **IMAGE PROCESSING APPARATUS**

(57)    In an image processing apparatus, a lower magnification image acquisition section acquires a whole specimen image at a lower magnification. An area division information memory stores, as area division information, the position information at a plurality of smaller areas into which a whole specimen is divided with a partially overlapped portion left. In accordance with the area division information, a high magnification image acquisition section sequentially acquires an image on substantially the some area as the divided area at a higher magnification. A positional displacement detection section detects the positional displacement of the acquired higher magnification image based on the lower magnification specimen image. A positional displacement correction section corrects the position of the respective high magnification image based on the detected positional displacement. An image joining section sequentially joins together the respective higher magnification images and creates a higher magnification image corresponding to a whole specimen.

FIG. 1

**Description**

Technical Field

The present invention relates to an image processing apparatus and, in particular, to a microscopic image joining apparatus configured to positively join a microscopic image of a higher resolution and wider visual field with the use of a plurality of specimen images acquired in a divided way.

Background Art

Where a specimen is observed under a microscope, a range observable one at a time is determined mainly by the magnification of an objective lens and, as the magnification of the objective lens becomes higher, an observation range is restricted to a very small portion of a specimen. In pathological diagnosis, on the other hand, there is a demand that a specimen's whole image be grasped so as to prevent a diagnostic site from being left unnoticed. Further, with an advance of the information processing technique, an electronic information form of an image has been promoted on pathological diagnosis and there is also a demand that any microscopic observation image acquired by a camera be realized to the same high resolution level as that of a conventional camera film.

Up to this time, the following methods have been known as the method for obtaining a microscopic image of a higher resolution or such an image with a wider angle of view. A first method for example comprises, as disclosed in JPN PAT APPLN KOKAI PUBLICATION NO. 3-209415, relatively scanning a specimen-placed stage and illumination, dividing the specimen into a plurality of areas and acquiring their partial images, and combining mutually continuous images, like tiles, as a related array and creating a whole specimen image. A second method for example relates to a method for reconstituting a whole specimen image by joining together associated images and, for example, JPN PAT APPLN KOKAI PUBLICATION NO. 9-281405 discloses a microscopic system by dividing a whole specimen area into a plurality of mutually overlapped portions, acquiring the respective smaller areas with the use of a microscope, comparing the overlapped portions of the acquired respective images, detecting their positional displacement, correcting the image positions of the respective smaller areas and joining together the images to constitute a specimen's image of high accuracy and wide visual field. A third method comprises, as shown in JPN PAT APPLN KOKAI PUBLICATION NO. 2000-59606, constituting a combined whole image by acquiring a whole subject and a plurality of highly accurate, divided partial images, enlarging the whole image, detecting the positions of the divided images highly accurately acquired from the whole image and replacing the corresponding portions of the enlarged whole image by the highly accurate partial images.

However, the conventional methods described above are disadvantageous in the following respects.

In the first method, the images obtained by photographing the divided parts of an object are merely combined. The photographed regions of the images may not accurately join one another because the motion error of the stage is not taken into account. Inevitably, no accurate image of the entire specimen cant be obtained. Generally, the errors in reproducing the position of the stage ranges from several microns to tens of microns. If the objective lens used to photograph the object is a high-power one, the displacement of one image from an adjacent one may amount to several pixels to tens of pixels.

In the second method, the specimen is divided into small regions, and these regions are photographed, providing images that overlap one another. The overlapping parts of the images provided are then compared by means of template matching, thereby detecting an accurate positional relation between any adjacent images. To reduce the number of regions or shorten the time required to combine the images of the regions to form an image of the entire specimen, however, the overlapping parts can be only 10% to 20% in most cases. If no parts of the image, which characterize the specimen, exist in the limited overlapping parts, the template matching of the overlapping parts will be unsuccessful. Consequently, the displacement may be accurately detected. As the images of the regions are sequentially combined, one image with another, the error in detecting the displacement of each image is added to the error in detecting the displacement of any other image. Further, this method can hardly combine a plurality of images well.

In the third method, the image of the entire object is enlarged in the same magnification as the high-resolution image and then stored. If many images are combined, a memory of large storage capacity must be used to store the enlarged image of the entire object. In view of this, the third method is not practical if hundreds to thousands of high-power images are combined as in the image processing apparatus according to the present invention. There are disclosed no techniques of eliminating non-uniformity at the seams of the combined image, which results from the distortion of the photographing optical system.

Disclosure of Invention

An object of the present invention is to provide an image processing apparatus that at the time of combining images can reliably combine images of the entire object even if an image of the object does not exit in the overlapping parts, and can provide a combined image having an uniform background under different photographing conditions at the time of photographing the divided parts.

In a first aspect of the present invention, there is provided an image processing apparatus comprising a lower magnification image acquisition section configured to acquire an image on a whole specimen area at a lower magnification corresponding to a first magnification; an area division information memory configured to, when the whole specimen area is divided into a plurality of smaller areas with a partially overlapped area included, store the position information of each smaller area as area division information; a higher magnification image acquisition section configured to sequentially acquire substantially the same area as the divided area at a second magnification in accordance with the area division information, the second magnification being higher than the first magnification; a positional displacement detecting section configured to, based on a lower magnification specimen image acquired by the lower magnification image acquisition section, detect a positional displacement of a higher magnification image acquired by the higher magnification image acquisition section; a positional displacement correction section configured to correct the position of each higher magnification image based on the positional displacement detected by the positional displacement detection section; and an image joining section configured to sequentially join together the respective higher magnification images corrected by the positional displacement correction section and create a higher magnification image of the whole specimen area.

In a second aspect of the present invention, there is provided an image processing apparatus according to the first aspect of the invention which preferably further comprising an image quality difference detection section configured to detect a difference between an image quality of the higher magnification image at the respective smaller area corrected by the positional displacement correction section and an image quality of a partial image of the lower magnification specimen image corresponding to the higher magnification image, and an image quality difference correction section configured to correct the image quality of the higher magnification image at the smaller area based on the image quality difference detected by the image quality difference detection section.

In a third aspect of the present invention, there is provided an image processing apparatus according to the second aspect of the present invention wherein the image quality difference is preferably generated by a difference in brightness.

In a fourth aspect of the present invention, there is provided an image processing apparatus according to the second aspect of the present invention wherein the image quality difference is preferably generated by a difference in uniformity of brightness.

In a fifth aspect of the present invention, there is provided an image processing apparatus according to the second aspect of the present invention wherein the image quality difference is preferably generated by a difference in geometric characteristics.

In a sixth aspect of the present invention, there is provided an image processing apparatus according to the first aspect of the present invention wherein preferably the lower magnification image acquisition section has a linear sensor configured to acquire a whole specimen image by scanning relative to the specimen and the higher magnification image acquisition section has an area sensor configured to acquire a portion of the specimen as an image.

In a seventh aspect of the present invention there is provided an image processing apparatus according to the first or sixth aspect of the present invention wherein, preferably, by comparing a lower magnification image acquired by the lower magnification image acquisition section and the higher magnification image acquired by the higher magnification image acquisition section, a positional relation between the lower magnification image acquisition section and the higher magnification image acquisition section is detected and, based on the detected positional relation, the area division information is corrected.

In an eighth aspect of the present invention there is provided an image processing apparatus according to the seventh aspect of the present invention wherein the positional relation is preferably determined by taking a horizontal or vertical movement into consideration.

In a ninth aspect of the present invention there is provided an image processing apparatus according to the seventh aspect of the present invention wherein the positional relation is preferably determined by taking a rotational movement into consideration.

Advantages of the invention will be set forth in the description which follows, and in part will be obvious from the description, or may be learned by practice of the invention. Advantages of the invention may be realized and obtained by means of the instrumentalities and combinations particularly pointed out hereinafter.

Brief Description of Drawings

The accompanying drawings, which are incorporated in and constitute a part of the specification, illustrate presently preferred embodiments of the invention, and together with the general description given above and the detailed description of the preferred embodiments given below, serve to explain the principles of the invention.

FIG. 1 is a functional block diagram showing an image processing apparatus according to a first embodiment of the present invention;

FIG. 2 is a view showing a relation between a lower magnification whole specimen image L and four divided specimen areas;

FIGS. 3A, 3B are views (part 1) for explaining the function of a positional displacement detection section 14;

FIGS. 4A, 4B are views (part 2) for explaining the function of a positional displacement detection section 14;

FIG. 5 is a view showing one example of correcting a positional displacement of a higher magnification image;

FIG. 6 is a flowchart showing a processing algorithm of the present embodiment;

FIG. 7 is a functional block diagram of an image processing apparatus according to a second embodiment of the present invention;

FIGS. 8A to 8D are views showing a difference in brightness between higher magnification images H1, H2 and corresponding lower magnification partial images L1, L2;

FIGS. 9A, 9B are views showing input/output characteristics when a lower magnification image, a higher magnification image H1 and a higher magnification image H2 are acquired;

FIGS. 10A, 10B are views for explaining the procedure for detecting a difference in geometric variation between the higher magnification image H1 and the corresponding lower magnification partial image L1;

FIGS. 11A, 11B are views for explaining the procedure for detecting a difference in uniform brightness between the higher magnification image H1 and a corresponding lower magnification partial image L1;

FIG. 12 is a view showing a structure of an image processing apparatus according to a third embodiment of the present invention;

FIG. 13 is a view showing a misalignment on an optical axis between a higher magnification lens and a lower magnification lens in a fourth embodiment of the present invention; and

FIG. 14 is a view showing an angular shift resulting from an aligning rotation in the fourth embodiment of the present invention.

Best Mode for Carrying Out the Invention

The embodiments of the present invention will be described in more detail below with reference to the drawing.

(First Embodiment)

First, an explanation will be made below about the first embodiment. An image processing apparatus of the present invention comprises, as a system structure, a microscope having objective lenses of a plurality of kinds of magnifications not shown, an electrically driven stage configured to move a specimen in a two-dimensional way under a visual field of the microscope, a CCD camera configured to acquire a microscopic image, and a personal computer as a controller configured to control these parts.

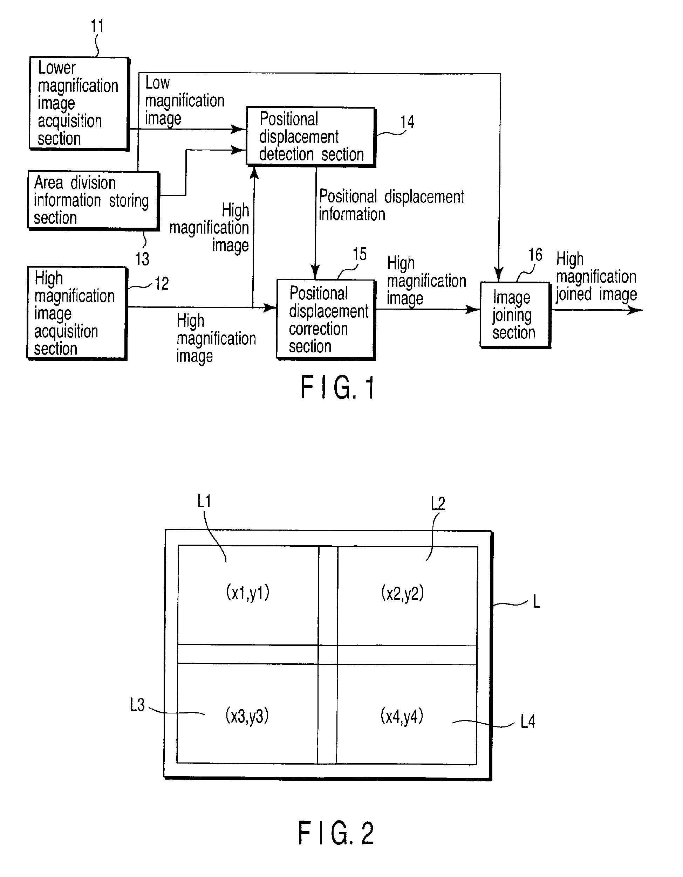

FIG. 1 is a functional block diagram showing the image processing apparatus according to the first embodiment. In order to generate a wide visual field image of high resolution, a lower magnification image corresponding to a whole image of the specimen is acquired by means of a lower magnification image acquisition section 11 using a lower magnification objective lens. A corresponding relation between the pixel positions of the acquired image and the coordinate of the stage is calculated from the number of pixels in the image acquisition element, a range of the visual field of the lower magnification image acquisition section 11 and a coordinate of the electrically driven stage.

Then, a lower magnification image area thus acquired is divided into a plurality of partially overlapped smaller areas. The area division information thus taken at this time is converted to the coordinate of the electrically driven stage and stored in an area division information memory section 13.

Then the objective lens is switched to a higher magnification one and, by driving the stage, the specimen is moved to the coordinate as stored in the area division information memory section 13. Since, by doing so, a predetermined smaller area is moved to a position under the image acquisition range of the higher magnification objective lens, a higher magnification image of the corresponding smaller area is acquired by the higher magnification image acquisition section.

In order to accurately join together those sequentially input higher magnification images, correction has to be made by detecting any displacement from a predetermined position represented by the area division information of the acquired higher magnification image.

In a positional displacement section 14, a lower magnification partial area corresponding to the acquired higher magnification image is cut from the whole specimen image of the lower magnification in accordance with the area division information above and, by achieving a template matching to the higher magnification image using this lower magnification partial image as a reference, any positional displacement of the higher magnification image is detected. In a positional displacement correction section 15, the position of the higher magnification image is corrected in accordance with the detected positional displacement information. The corrected higher magnification image is input to an image joining section 16. The image joining section 16 sequentially joins together the corrected higher magnification image and one-previous-corrected higher magnification image in accordance with the area division information and, in this way, a higher magnification combined image is sequentially completed.

FIG. 2 shows a relation between the lower magnification whole image L of the specimen and four-divided specimen area. In FIG. 2, L1, L2, L3 and L4 represent four divided smaller areas including a partially overlapped area. The central coordinate of these smaller areas L1, L2, L3 and L4 is converted to a coordinate system of the electrically driven stage to obtain (x1, y1), (x2, y2),(x3, y3) and (x4, y4). This coordinate information is stored in the area division information memory section 13.

Where the smaller area L1 is acquired as a higher magnification image, the stage is driven to allow the specimen to be moved to the stage's coordinate (x1, y1) and its image to be acquired with a higher magnification lens. If the stage's coordinate reproduction is fully adequate, a target area can be acquired as a higher magnification image and hence there occurs no positional displacement of the higher magnification image. Generally, the normal coordinate reproduction accuracy of the electrically driven stage is of the order of a few $\mu$ to a few tens of $\mu$. Even if, therefore, the area L1 is trying to be acquired as an image, there is a possibility that the acquired higher magnification image will be displaced from a predetermined position by the coordinate reproduction accuracy extent. In order to secure an accurate image joining, therefore, it is necessary to input the lower magnification image, area division information and higher magnification image to the positional displacement detection section 14 and to detect the positional displacement from a predetermined area of the higher magnification image.

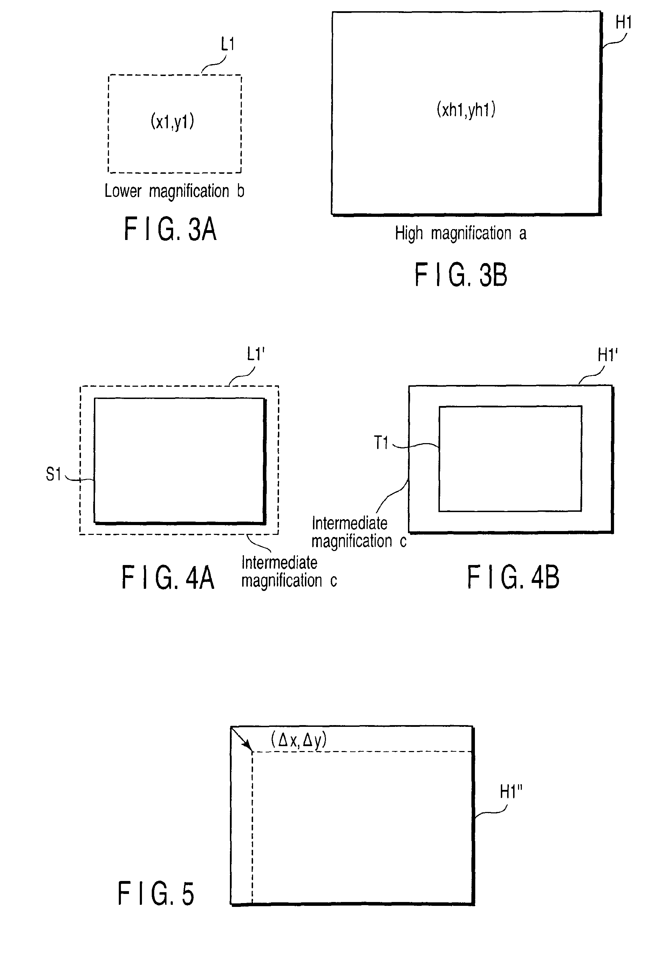

The function of the positional displacement section 14 will be explained in more detail below with reference to FIGS. 3A, 3B and 4A, 4B. The L1 shown in FIG. 3A represents a divided image by cutting from the lower magnification image L of the specimen in accordance with the area division information. The stage coordinate at a center of L1 is represented by (x1, y1). An image acquired by a higher magnification corresponding to this image L1 is represented by H1 in FIG. 3 where the center stage coordinate is (xh1, yh1).

In the absence of any reproduction error about the stage coordinate, (x1, y1) = (xh1, yh1) but there occurs a displacement in actual practice. There, this displacement ($\Delta x$, $\Delta y$) is found by a template matching of H1 and L1. First, it is necessary that such two images of different magnifications be converted to ones of the same magnification. Let it be assumed that b represents the image acquisition magnification of the lower magnification image L1; a, the image acquisition magnification of the higher magnification image H1; and c, a template matching magnification. In this connection it is to be noted that, generally, a relation a $\square$ c $\square$ b exists.

L1' shown in FIG. 4A represents an image with the L1 enlarged to an intermediate magnification c by a linear interpolation, while, on the other hand, H1' shown in FIG. 4B represents an image with the H1 reduced to an intermediate magnification c. In order to effect the template matching, it is to be noted that with a near-central area T1 of the H1' being as a template image, the area S1 of the L1' is regarded as a search area taking the reproduction accuracy of the stage coordinate into consideration. The search area S1 is greater than the template image T1. At the template matching, while scanning the template image T1 within the search area S1, the extent of matching between the template and the corresponding block in the search area is evaluated with the use of an evaluation function and, if the highest matching extent position is detected, then the difference between that position and the coordinate (x1, y1) corresponds to a positional displacement of the higher magnification image. Here, as the evaluation function use may be made of a normalized correlation coefficient between the template and the corresponding block or, in the respective pixels, use may be made of a sum of the absolute value of the luminance difference between the template and the corresponding block.

In order to enhance the probability of a success of the template matching and the matching accuracy, it is necessary that the template and its search area be made as great as possible. In this case, however, it takes more time to perform such matching processing. The high-speed processing is done by performing a plural-stage template matching. First, a coarse search may be performed with an intermediate magnification d (a < d < c) and, at a marginal portion of a coarsely detected area, a fine search be made with an intermediate magnification c.

Since, in the present embodiment, the electrically driven stage is used, consideration is given, as a positional displacement, to a vertical or a horizontal movement only. If, in this case, any rotation is involved, detection is made in a way to include a rotational angle also. After the positional displacement of a higher magnification image is detected by the position detection section 14, the positional displacement of the higher magnification image is corrected with the use of the detection data. This correction is made with the use of an affine transformation.

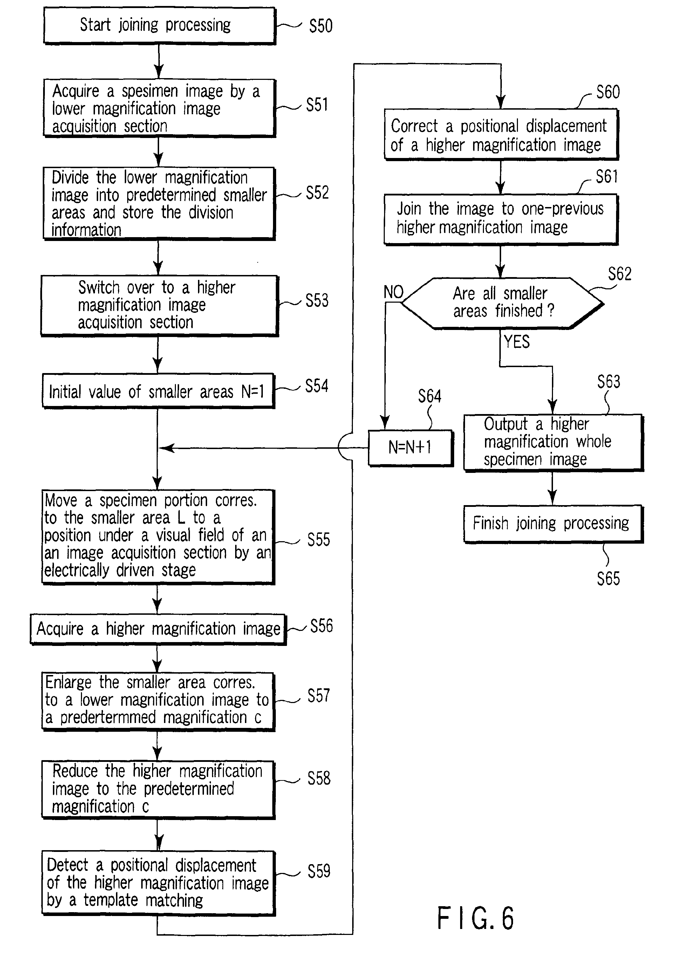

FIG. 5 shows one example of correcting a positional displacement of the higher magnification image. ($\Delta x$, $\Delta y$) represents a positional displacement of the higher magnification image H1 found by the positional displacement detection section 14. If the image content of the higher magnification image H1 is moved by an extent ($\Delta x$, $\Delta y$), it is possible to obtain a higher magnification image H1 free from any positional displacement. It is to be noted that the blank portion of the ($\Delta x$, $\Delta y$) at the marginal portion of the image produced by the movement is eliminated from the overlapped portion at a time of joining together the associated images.

The image joining section 16 is such that, in accordance with the area division information above, the positional displacement-corrected input high magnification images are sequentially joined together to provide a higher magnification image corresponding to a whole specimen. Since, from the area division information, it is possible to calculate the width of the overlapped area between the adjacent higher magnification images, any blank portion created at the marginal portion of the image is eliminated by the position displacement correction of the higher magnification image in the calculation of the width of the overlapped portion. At the overlapped area, blending processing is performed on the adjacent images, so that the middle of the overlapped area corresponds to a joined portion.

Now, the algorithm of the above-mentioned embodiment will be explained below. FIG. 6 is a flowchart showing a processing algorithm of the present embodiment. When the joining processing is started (step S50), the objective lens of the microscope is set to a lower magnification by means of the controller and a whole image of a specimen is acquired at a lower magnification (step S51). Then the lower magnification image is divided into predetermined smaller areas and, at this time, the division information and a subsequent image acquiring order at a higher magnification are reserved at step S52. At this time, a coarse range of a lower magnification image may be automatically detected followed by an automatic division of the image into smaller areas or a lower magnification image may be presented to the user, so that it can be divided into smaller areas by his or her choice.

Then the objective lens of the microscope is switched to a higher magnification one by an instruction of the controller (step S53). Then, 1 is added as an initial value to a variable N representing a processing number (step S54). Then, in order to acquire a smaller area corresponding to the processing number at a higher magnification, a specimen portion corresponding to the smaller range L is moved by the electrically driven stage to a position under an image-acquisition visual field of a higher magnification image acquisition section (step S55). And a higher magnification image is acquired (step S56).

Then, in order to detect the positional displacement of the higher magnification image corresponding to the position reproduction error of the stage, a corresponding lower magnification partial image is cut and enlarged to a predetermined intermediate magnification c at step S57 and a higher magnification image is reduced to the intermediate magnification c at step S58.

Then, with the central portion of the higher magnification image defined as a template, a corresponding block in a range of a predetermined search area of the lower magnification image is detected. A positional displacement corresponding to a predetermined position of the higher magnification image (a position at an area dividing time) is detected (step S59) by the template matching. A positional displacement of the higher magnification image is corrected based on the positional displacement detected (step S60).

The corrected higher magnification image is joined to the one-previous higher magnification image at step S61 and the higher magnification images are sequentially created to provide a higher magnification whole image. It is decided whether or not, prior to the next higher magnification processing, divide-processing are all completed at step S62. If NO, a variable N representing a processing number is incremented by one at step S64 and this processing goes back to step S55 for repetition. If YES, a finally completed higher magnification whole image is output as a specimen's whole image at step S63 and whole joining processing is completed at step S65.

Although, in the above-mentioned explanation, the coordinate system, has been explained all as being the coordinate of the electrically driven stage, there arises no problem even if it is converted to those pixel units at a time of a higher magnification. Although the stage has been explained as being electrically driven, it may be of a manual operation type. Further, in place of moving the specimen two-dimensionally with the image acquisition section fixed, an image acquisition section may be moved two-dimensionally relative to a fixed specimen to acquire divisional partial images.

According to the present embodiment, when divisionally acquired higher magnification images are joined together, the positional displacement is corrected based on the lower magnification image and, even if no specimen image exists at the overlapped area, it is possible to accurately correct any positional displacement and hence to positively join together microscopic images as a whole image. Further, it is possible to achieve less memory level necessary to the image processing and hence to provide a high resolution better image of a whole specimen with less prominent joining section even if there occur any difference in light exposure condition at the time of acquiring division images and any optical distortion involved. Further, even if the higher magnification images are sequentially input, these images are sequentially joined together and, since the joining together of the division images is done is synchronism with the image acquisition operation, it is possible to achieve high-speed processing as a whole.

(Second Embodiment)

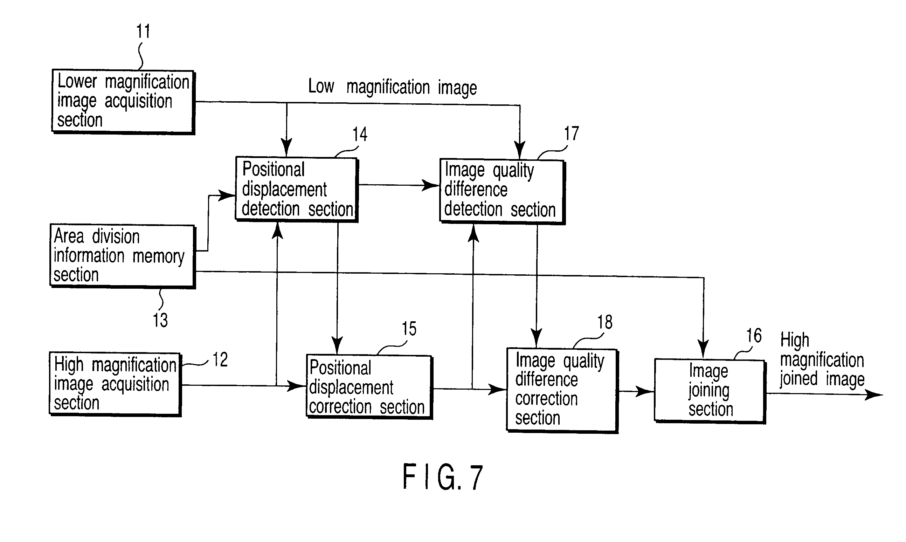

An explanation will be made below about the second embodiment of the present invention. FIG. 7 is a functional block diagram of an image processing apparatus. In the arrangement shown in FIG. 7, the same reference numerals are employed to designate parts or elements corresponding to those shown in FIG. 1 and any further explanation of them is omitted. Here, those different sections, that is, an image quality difference detecting section 17 and image quality difference correction section 18, will be explained in more detail below.

It may be considered that, when in FIG. 7 a specimen is acquired as divided images by a higher magnification image acquisition section 12, not only a positional displacement resulting from any accuracy extent of a stage as set out in connection with the first embodiment but also the difference in quality between the higher magnification images exerts an adverse effect over the quality of joined images. First, there arises the difference in brightness between the higher magnification images resulting from the different light exposure condition of the respective higher magnification images. Since, in the case of acquiring any image as divided images, a predetermined area is acquired as an image under an optimal exposure condition, if any smaller areas are acquired as images with an AGC (auto gain control) of a CCD camera ON, it follows that, even if the positional displacement is accurately detected so that respective higher magnification images are accurately joined together, a joined section prominently appears on the joined images due to the difference in luminance between the higher magnification images.

Where a plurality of higher magnification images acquired under an optical image acquisition system having a prominent difference in brightness of acquired images between near an optical axis and at a marginal portion are joined together, even if an average brightness is achieved between the higher magnification images and there is no positional displacement, a joined section appears prominent on the joined image due to the shading brightness between the higher magnification images.

Where the geometric characteristics of the images differ by the distortion aberration of the image acquisition system between near the optical axis and at the marginal portion, even if any positional difference between the higher magnification images is accurately found with the central portion of the higher magnification image as a template in accordance with the method of the first embodiment, a joined section appears prominent on the joined image due to the positional displacement between the adjacent higher magnification images near the joined section.

According to the present embodiment, the higher magnification image whose positional displacement is corrected by a positional displacement correction section 15 of FIG. 7 is input, together with a corresponding lower magnification image from a lower magnification image acquisition section 11, to the image quality difference detection section 17. The image quality difference detection section 17 makes comparison between the input higher magnification image and the lower magnification image and generates image quality difference correction data for matching the image quality of the higher magnification image to the lower magnification image. The image quality difference correction section 18 corrects the image quality of the higher magnification image based on the image quality difference correction data and then delivers an output to an image joining section 16.

Now, in connection with the image quality difference detection section 17, an explanation will be made in more detail below about the procedure of detecting a difference in brightness between the higher magnification image and the lower magnification image or a difference in brightness shading or in distortion aberration and finding correction data. In order to find the image quality difference of the higher magnification image relative to the lower magnification image, it is first necessary to convert two images of different magnifications to ones of an equal magnification as in the same method of finding the positional displacement. In this case, either an intermediate magnification between the lower magnification and the higher magnification or the lower magnification may be used as a reference magnification. Here, the calculation of the correction data is made based on the higher magnification taking a later correction to a higher magnification image into consideration.

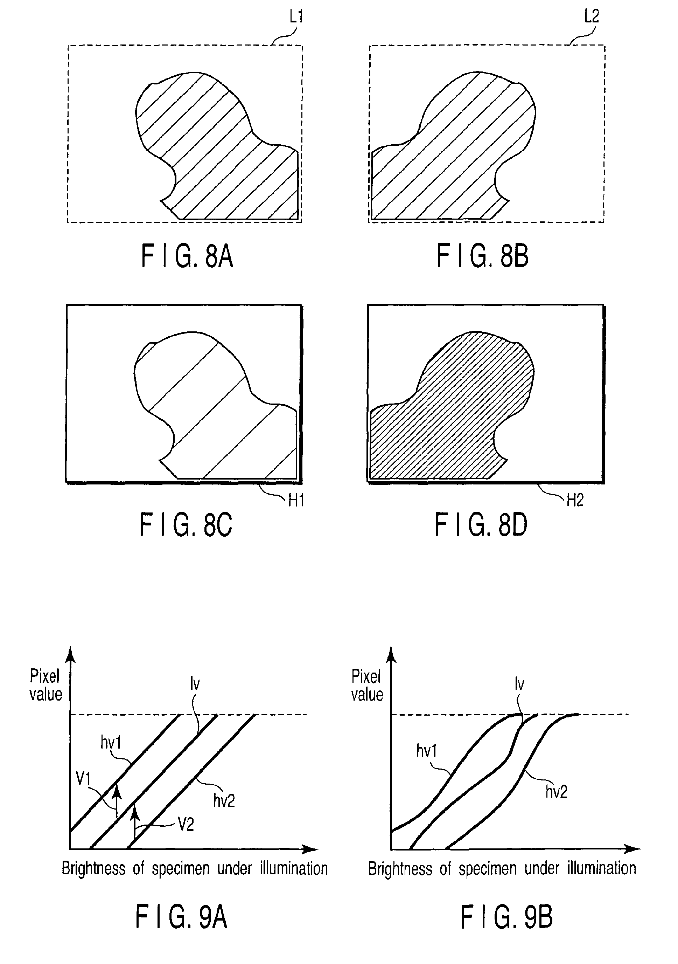

FIGS. 8A to 8D show a difference in brightness of lower magnification partial images L1, L2 relative to higher magnification partial images H1, H2. The lower magnification partial images L1, L2 are such that those partial images cut from a lower magnification whole image of a specimen on the basis of area division information are enlarged to a higher magnification. Since the lower magnification partial image of a whole specimen image is acquired as one sheet of an image, the partial image divided from this image is the same as the image acquired under the same exposure condition. Since, on the other hand, a different exposure condition is used when the higher magnification images H1, H2 are acquired, it is necessary to correct the brightness of the higher magnification image from the H1 to the L1 and from the H2 to the L2.

FIGS. 9A, 9B are views showing the input/output characteristics when the lower magnification image, higher magnification image H1 and higher magnification image H2 are acquired. Let it be supposed that, in FIG. 9A, lv, hv1 and hv2 represent input/output characteristics curves corresponding to the lower magnification image, higher magnification image H1 and higher magnification image H2 respectively. In order to, in this case, correct the average brightness of the higher magnification image H1 to the same level as that of the lower magnification partial image, a correction value V1 may be added to respective pixel values of the higher magnification image H1.

$$V1 = VL1 - VH1$$

Here, VL1 and VH1 represent average values of the pixel values of the images L1 and H1. Similarly, in order to correct the average brightness of the image H2 to the same level as that of the L2, the correction value V2 may be added to the respective pixel values of the H2.

$$V2 = VL2 - VH2$$

Here, VL2 and VH2 represent average values of the pixel values of the images L2 and H2. In general, however, the input/output characteristics of the image acquisition element never provides a simple straight line as shown in FIG. 9A. If the input/output characteristics shows curves as shown in FIG. 9B, it is necessary that, in the respective pixels of the higher magnification image, the input/output correction be made in accordance with the input pixel values. In this case, from the input/output characteristics of the lower magnification image and higher magnification image which are initially measured, a correction table corresponding to the pixel values is found and it is used as correction data.

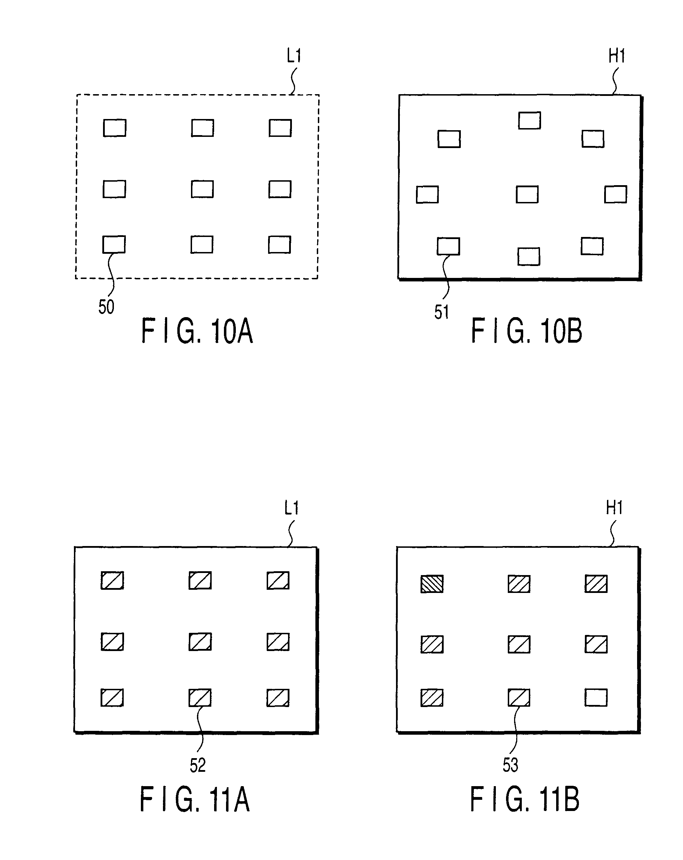

FIGS. 10A and 10B are views for explaining the procedure for detecting a difference in geometric deformation of the higher magnification image H1 (FIG. 10B) and corresponding lower magnification partial image L1 (FIG. 10A). In the same way as that of the higher magnification image acquisition section, there also exists a distortion aberration resulting from an optical system which is involved in the lower magnification image acquired by a lower magnification image acquisition section. Since the present invention is directed to joining together those higher magnification images with the lower magnification image as a reference, even if there exists any aberration in a joined whole image, there is no problem unless any positional displacement occurs at that joined section. It is also considered that, since the lower magnification image L1 constitutes one smaller area of the lower magnification whole image, any distortion aberration can be disregarded. An explanation will be made below about the method of calculating correction data of the distortion aberration caused on the optical system at the higher magnification image acquisition section, assuming that any distortion aberration resulting from the lens optical system has already been corrected on the lower magnification partial image L1 or there is no distortion aberration on the lower magnification partial image.

First, a plurality of feature points 50 are extracted from the lower magnification partial image L1 shown in FIG. 10A. The feature points 50 represent higher contrast pixels in a block including pixels at a marginal portion. Then a point 51 corresponding to the feature point 50 of the lower magnification image is detected from the higher magnification image. As the method for detecting the corresponding point 51 use is made of a template matching by which it is possible to obtain coordinate data on the feature points 50 and corresponding points 51. With the coordinate of the feature point 50 represented by (xi, yi) and that of the corresponding point 51 by (xi', yi'), it follows that, in order to correct the distortion aberration of the higher magnification image, the value of each pixel of the corrected higher magnification image may be found by the following equation.

$$(x", y") = (x, y)$$

$$av[x", y"] = hv[x', y']$$

Here, av[] represents a pixel value of the respective pixel in the corrected higher magnification image and hv[] a pixel value of the respective pixel in the higher magnification image before correction. Although, by finding the feature point 50 and corresponding point 51, the coordinate of the point 51 corresponding to the feature point 50 at the pixel position can be found, the coordinate of a corresponding point in any other position cannot be found. In order to find the positions of those pixels in the higher magnification image corresponding to all the pixels in the lower magnification image, use is made of a linear interpolation by which they are found from the coordinate of a plurality of feature points 50 near any pixel of interest and the corresponding points 51. The positions of the pixels in the higher magnification image corresponding to all the pixels in the lower magnification partial image may of course be found by estimating the coefficients of a numerical equation representing a reference distortion aberration from a plurality of feature points and corresponding points.

FIGS. 11A and 11B are views for explaining the procedure for detecting a difference in uniformity between the brightness of the higher magnification image H1 (FIG. 11B) and that of the corresponding lower magnification partial image L1 (FIG. 11A). There exists a brightness shading of the higher magnification image relative to the lower magnification image due to the shading of an image acquisition lens and a difference in illumination to the specimen. An explanation will be made below about the method of finding correction data for correcting the shading of the higher magnification image H1 in accordance with the lower magnification partial image L1. In FIG. 11B, it is assumed that the higher magnification image H1 is an image obtained after necessary corrections, that is, a positional displacement correction, brightness correction and distortion aberration correction have been made.

In order to correct the shading of the higher magnification image, a plurality of feature points are extracted from the lower magnification partial image L1. Although the pixel at a predetermined position as shown in FIG. 11A is used as the feature point 52, it is more preferable to use a pixel at a position where the contrast of the block containing marginal pixels is lower. This is because, even if any minor displacement should occur between the feature point 52 and the corresponding point 53, more accurate shading data is obtained.

In the higher magnification image where the necessary corrections including the positional displacement correction, brightness correction and distortion aberration correction are made, a complete positional matching is achieved between the higher magnification image and the lower magnification partial image and the pixel at the same position of the higher magnification image becomes a corresponding point 53 relative to the feature point 52. And a ratio k[xi, yi] between the pixel value of the feature point 52 and that of the corresponding point 53 is found with (xi, yi) as the coordinate of the feature point 52 (corresponding point 53). This pixel value ratio serves as the shading data of the higher magnification image. The pixel value of the respective pixel of the corrected higher magnification image may be found by the following equation.

$$av[xi, yi] = hv[xi, yi]*k[xi,yi]$$

It is to be noted that av[] represents the pixel value of the respective pixel of the corrected higher magnification image and hv[] the pixel value of the respective pixel of the higher magnification image before correction. Although the correction data at the feature point 52 and corresponding point 53 is found, no correction data on any other position is found. The correction data on all the pixels of the higher magnification image except the corresponding point 53 is found by a linear interpolation from a plurality of correct data near the pixel of interest. The correction data on all the pixels of the higher magnification image may be course be found by estimating the coefficients of a numerical equation representing a reference shading from the pixel value ratio between a plurality of sets of feature points 52 and the corresponding point 53.

Although an explanation has been made up to this point under an assumption that the image quality difference is detected at each higher magnification image and corrected, any image quality difference found at the higher magnification image of a predetermined smaller area may of course be used for processing on the higher magnification image at any other smaller areas.

According to the present invention, as set out above, when the higher magnification image is acquired, an image quality difference of the higher magnification image relative to the lower magnification image is detected and a corresponding correction is made. Even if, therefore, the exposure condition of the higher magnification image differs and there arises any distortion aberration at the higher magnification image acquisition section and any brightness shading at the higher magnification image, a higher magnification whole image of the specimen can be generated without involving any prominent joined section.

(Third Embodiment)

Now an explanation will be made below about the third embodiment of the present invention. Although, in the above-mentioned respective embodiments, the explanation has been made under an assumption that the lower magnification image is acquired with the use of the lower magnification lens and the higher magnification image is acquired with the use of the higher magnification lens and the same kind of image acquisition element is used at the lower magnification image acquisition section and higher magnification image acquisition section, there is a limitation on the image-taking visual field of the lower magnification lens of the microscope. Usually, the whole specimen is wider than the visual field of the lower magnification lens. In order to acquire a whole image of the specimen, the lower magnification image acquisition section and higher magnification image acquisition section are separately provided so that a lower magnification image is acquired by a linear sensor capable of covering a specimen range and a higher magnification image is acquired by a conventional area sensor.

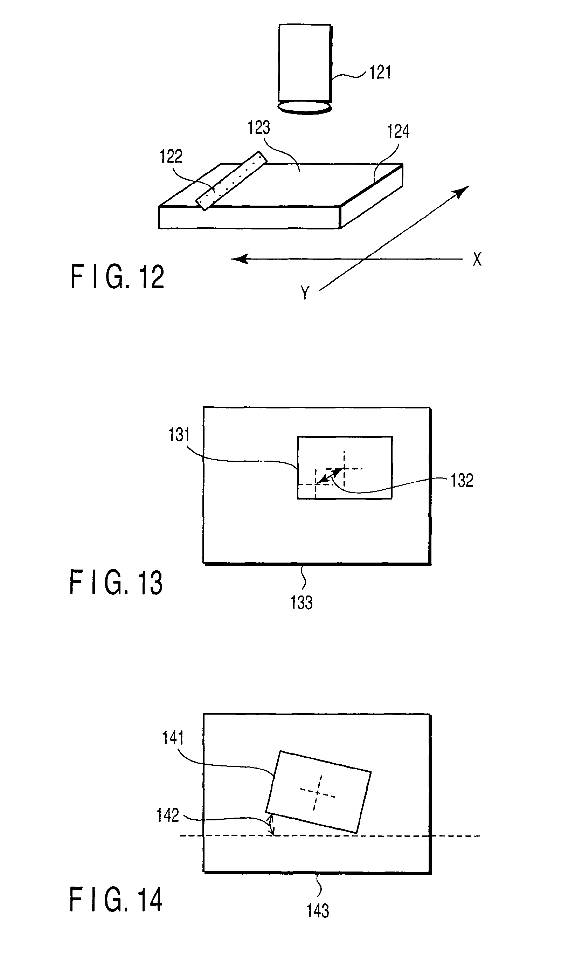

FIG. 12 is a view showing a structure of an image processing apparatus according to this embodiment. When a lower magnification image is to be acquired, a whole image of a specimen 123 is acquired by a linear type CCD 122 constituting a lower magnification image acquisition element, while moving an electrically driven stage 124 in an X-direction. Then, the specimen area is divided into a plurality of smaller areas based on the whole acquired image of the lower magnification specimen. When the higher magnification image is to be acquired, the divided smaller areas are sequentially moved by the stage 124 to a position under the visual field of the area type CCD constituting a higher magnification image acquisition area. The following processing is the same as that of the conventional embodiment and an explanation is omitted here.

(Fourth Embodiment)

An explanation will be made below about the fourth embodiment of the present invention. When an image is acquired by switching a lower magnification lens and higher magnification lens without moving any electrically driven stage, there exist a shift 132 in center position due to a displacement in an optical axis of the lens as shown in FIG. 13 and an angular shift 142 resulting from a rotation in center position as shown in FIG. 14.

In the present invention, the whole specimen is divided into a plurality of smaller areas while referring to a lower magnification image and the stage is moved in accordance with the position information of the respective smaller area. Then a higher magnification image is acquired and a positional displacement between the higher magnification image of each smaller area and a partial image of the corresponding lower magnification image. Then the positional displacement of the higher magnification image is corrected and those higher magnification images are joined together. Herein lies the feature of the present invention. In case there occur any considerable shift in center position or any considerable rotation in center position between the lower magnification and the higher magnification, even if the whole specimen is divided into areas based on the lower magnification image and an amount of movement of the stage is instructed in accordance with the area division information at that time, it is not possible to acquire any higher magnification image of a desired position. It is, therefore, necessary to initially detect to what extent there occur a shift in center position or a rotation in center position at the time of switching the lower magnification lens and higher magnification lens.

As a method for detecting a shift in center position, without moving the position of the stage, the lower magnification image and higher magnification image are acquired at exactly the same position and, with the higher magnification image used as a template, a matching position is detected from the lower magnification image. By doing so it is possible to detect a shift between the matching position and the center of the image as a shift in center position.

As a method for detecting a rotation in center position, without moving the position of the stage, the lower magnification image and higher magnification image are acquired at exactly the same position as in the case of detecting a shift in center position and a matching position is found between the higher magnification image and the lower magnification image. Then at the matching position an angle at which a correlation coefficient becomes the greatest is found while rotating the template little by little. In this way, the rotation angle in center position is found.

As another method, with the use of the lower magnification image and two or more higher magnification images for different image acquisition positions, the respective higher magnification images allow the positions of the lower magnification image to be detected and, from these positions, a shift in rotation angle between the higher magnification and the lower magnification image acquisition section is found.

Using the detected shift in center position between the lower magnification and the higher magnification, area division information for dividing the whole specimen is corrected based the lower magnification image. With the area division information represented by the stage coordinate $(x_i, y_i)$ (i represents the number of each divided area) at the center of each divided area and the detected misalignment represented by $(\Delta x, \Delta y)$, the area division information is corrected as $(x_i + \Delta x, y_i + \Delta y)$. The corrected value is stored in a memory section (for example, an area division information memory section 13 in FIG. 1).

The lens position may be manually adjusted so that any shift in center position ceases to exist. With $\alpha$ representing a rotation angle in center position of the higher magnification lens relative to the lower magnification lens, the shift correcting method preferably comprises, while leaving the higher magnification image as it is, rotating the lower magnification image through an angle of $\alpha°$ to provide a new lower magnification image. Of course, each higher magnification image may be rotated through an angle of $-\alpha°$ while leaving the lower magnification image as it is or the rotation angle of the lower magnification lens are higher magnification lens may be adjusted without being rotated.

Where a plurality of images are joined together, a positive image joining can be provided as a whole without any specimen image being left at the overlapped portion and, even if the image acquisition condition differs at a division image acquisition time, it is still possible to provide an image processing apparatus in which a joined image can be constructed against a uniform background.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

**Claims**

1.  An image processing apparatus comprising:

    a lower magnification image acquisition section configured to acquire an image on a whole specimen area at a lower magnification corresponding to a first magnification;

an area division information memory section configured to, when the whole specimen area is divided into a plurality of smaller areas with a partially overlapped area included, store the position information of each smaller area as area division information;

a higher magnification image acquisition section configured to sequentially acquire an image on substantially the same area as the divided areas at a second magnification in accordance with the area division information, the second magnification being higher than the first magnification;

a positional displacement detection section configured to, based on a lower magnification specimen image acquired by the lower magnification image acquisition section, a positional displacement of a higher magnification image acquired by the high magnification acquisition section;

a positional displacement correction section configured to correct the position of each higher magnification image based on the positional displacement detected by the positional displacement detection section; and

an image joining section configured to sequentially join together the respective higher magnification images corrected by the positional displacement correction section and create a higher magnification image of the whole specimen area.

2. An image processing apparatus according to claim 1, further comprising:

an image quality difference detection section configured to detect a difference between an image quality of the higher magnification image at the respective smaller area corrected by the positional displacement correction section and an image quality of a partial image of the lower magnification specimen image corresponding to the higher magnification image; and

an image quality difference correction section configured to correct the image quality of the higher magnification image at the smaller area based on the image quality difference detected by the image quality difference detection section.

3. An image processing apparatus according to claim 2, wherein the image quality difference is generated by a difference in brightness.

4. An image processing apparatus according to claim 2, wherein the image quality difference is generated by a difference in uniformity of brightness.

5. An image processing apparatus according to claim 2, wherein the image quality difference is generated by a difference in geometric characteristics.

6. An image processing apparatus according to claim 1, wherein the lower magnification image acquisition section has a linear sensor configured to acquire a whole specimen image by scanning relative to the specimen and the higher magnification image acquisition section has an area sensor configured to acquire a portion of the specimen as an image.

7. An image processing apparatus according to claim 1 or 6, wherein, by comparing a lower magnification image acquired by the lower magnification image acquisition section and the higher magnification image acquired by the higher magnification image acquisition section, a positional relation between the lower magnification image acquisition section and the higher magnification image acquisition section is detected, and, based on the detected positional relation, the area division information is corrected.

8. An image processing apparatus according to claim 7, wherein the positional relation is determined by taking a horizontal or vertical movement into consideration.

9. An image processing apparatus according to claim 7, wherein the positional relation is determined by taking a rotational movement into consideration.

11

| Lower magnification image acquisition section |

Low magnification image →

| Positional displacement detection section | 14

| Area division information storing section |

High magnification image →

13

12

| High magnification image acquisition section |

High magnification image →

Positional displacement information ↓

15

| Positional displacement correction section |

High magnification image →

16

| Image joining section | → High magnification joined image

FIG. 1

L1          L2

(x1,y1)        (x2,y2)          L

L3 (x3,y3)        (x4,y4)       L4

FIG. 2

(x1,y1)

Lower magnification b

F I G. 3A

(xh1,yh1)

H1

High magnification a

F I G. 3B

L1'

S1

Intermediate
magnification c

F I G. 4A

H1'

T1

Intermediate
magnification c

F I G. 4B

(Δx, Δy)

H1"

F I G. 5

Start joining processing — S50

Acquire a spesimen image by a lower magnification image acquisition section — S51

Divide the lower magnification image into predetermined smaller areas and store the division information — S52

Switch over to a higher magnification image acquisition section — S53

Initial value of smaller areas N=1 — S54

Move a specimen portion corres. to the smaller area L to a position under a visual field of an an image acquisition section by an electrically driven stage — S55

Acquire a higher magnification image — S56

Enlarge the smaller area corres. to a lower magnification image to a predertermmed magnification c — S57

Reduce the higher magnification image to the predetermined magnification c — S58

Detect a positional displacement of the higher magnification image by a template matching — S59

Correct a positional displacement of a higher magnification image — S60

Join the image to one-previous higher magnification image — S61

Are all smaller areas finished ? — S62

NO

N=N+1 — S64

YES

Output a higher magnification whole specimen image — S63

Finish joining processing — S65

FIG. 6

FIG.7

L1

FIG. 8A

L2

FIG. 8B

H1

FIG. 8C

H2

FIG. 8D

Pixel value

lv

hv1

V1

V2

hv2

Brightness of specimen under illumination

FIG. 9A

Pixel value

lv

hv1

hv2

Brightness of specimen under illumination

FIG. 9B

L1

50

F I G. 10A

H1

51

F I G. 10B

L1

52

F I G. 11A

H1

53

F I G. 11B

F I G. 12

F I G. 13

F I G. 14

## INTERNATIONAL SEARCH REPORT

| International application No. |
|---|
| PCT/JP2004/006505 |

**A. CLASSIFICATION OF SUBJECT MATTER**
Int.Cl⁷ G06T3/00, H04N5/225, H04N5/265, G02B21/36

According to International Patent Classification (IPC) or to both national classification and IPC

**B. FIELDS SEARCHED**

Minimum documentation searched (classification system followed by classification symbols)
Int.Cl⁷ G06T3/00, H04N5/225, H04N5/265, G02B21/36

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 11-196317 A (Minolta Co., Ltd.),<br>21 July, 1999 (21.07.99),<br>Full text; all drawings<br>(Family: none) | 1-3,5-9<br>4 |
| Y | JP 11-102430 A (Sharp Corp.),<br>13 April, 1999 (13.04.99),<br>Full text; all drawings<br>(Family: none) | 4 |
| X<br>A | JP 11-196299 A (Minolta Co., Ltd.),<br>21 July, 1999 (21.07.99),<br>Full text; all drawings<br>(Family: none) | 1-3,5-9<br>4 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>15 June, 2004 (15.06.04) | Date of mailing of the international search report<br>29 June, 2004 (29.06.04) |
|---|---|
| Name and mailing address of the ISA/<br>Japanese Patent Office | Authorized officer |
| Facsimile No. | Telephone No. |

Form PCT/ISA/210 (second sheet) (January 2004)

| | INTERNATIONAL SEARCH REPORT | International application No. |
| --- | --- | --- |
| | | PCT/JP2004/006505 |

C (Continuation).  DOCUMENTS CONSIDERED TO BE RELEVANT

| Category* | Citation of document, with indication, where appropriate, of the relevant passages | Relevant to claim No. |
| --- | --- | --- |
| X<br>A | JP 11-196318 A (Minolta Co., Ltd.),<br>21 July, 1999 (21.07.99),<br>Full text; all drawings<br>(Family: none) | 1-3,5-9<br>4 |
| X<br>A | JP 11-196319 A (Minolta Co., Ltd.),<br>21 July, 1999 (21.07.99),<br>Full text; all drawings<br>(Family: none) | 1-3,5-9<br>4 |
| X<br>A | JP 2000-59606 A (Minolta Co., Ltd.),<br>25 February, 2000 (25.02.00),<br>Full text; all drawings<br>(Family: none) | 1-3,6-9<br>4,5 |
| A | JP 2001-292304 A (Fuji Xerox Co., Ltd.),<br>19 October, 2001 (19.10.01),<br>Full text; all drawings<br>(Family: none) | 1-9 |
| A | JP 9-281405 A (Olympus Optical Co., Ltd.),<br>31 October, 1997 (31.10.97),<br>Full text; all drawings<br>(Family: none) | 1-9 |
| A | JP 5-143713 A (General Electric Co.),<br>11 June, 1993 (11.06.93),<br>Full text; all drawings<br>& US 5187754 A | 1-9 |
| A | JP 3-209415 A (Fuji Photo Film Co., Ltd.),<br>12 September, 1991 (12.09.91),<br>Full text; all drawings<br>(Family: none) | 1-9 |

Form PCT/ISA/210 (continuation of second sheet) (January 2004)